# EUROPEAN PATENT APPLICATION

(11) **EP 0 913 876 A1**
(43) Date of publication of application: **06.05.1999**
(21) Application number: 97920486.4
(22) Date of filing: 04.05.1997
(51) Int. Cl.: H01M 4/04, H01M 4/48

(54) **A METHOD OF PREPARING POSITIVE MATERIAL FOR LITHIUM SECONDARY CELL BY MICROWAVE ENERGY**

(30) Priority: 10.05.1996 CN 96104965
(71) Applicant: Institute of Physics Chinese Academy of Sciences, Beijing 100080 (CN)
(72) Inventor: YAN, Hongwei, Beijing 100080 (CN); HUANG, Xuejie, Beijing 100080 (CN); CHEN, Liquan, Beijing 100080 (CN); XUE, Rongjian, Beijing 100080 (CN); HUANG, Hong, Beijing 100080 (CN)
(74) Representative: Bauer, Robert, Dipl.-Ing.
(86) International application number: CN9700039
(87) International publication number: WO9743794

(57) **Abstract**

The invention relates to a method of preparing anode materials for secondary lithium battery by microwave energy. Oxides, hydroxide or salt raw materials of Co, Ni, Mn, Cr, Ti, V, Sc, Fe and Li are weighed in the ratio Li₁₊ₓM_{1-y}M'_{ω}O_{4-z} (wherein x=-1∼5; y=-1∼1; ω=0∼6; Z=-8∼3; ), the raw materials are homogeneously mixed to produce a precursor body, the precursor body is placed in a thermos container capable of being transmitted by microwave, then placed in a microwave oven having microwave frequency of 0.3∼300 gigahertz (GHz) and microwave wavelength of 1mm ∼ 1m, and then heat-synthesized for 1 minute∼5 hours at 500°C ∼ 1000 °C, the anode material for lithium secondary lithium battery with the microwave oven cooling is thus produced . The method saves energy and decreases the loss of lithium in the heat-synthesizing process, so ensures the stability in material component.

## Description

### Field of the Invention

The present invention relates to a method for preparing anode materials for secondary lithium batteries.

### Background of the Invention

The method for preparing electrode materials containing lithium used as secondary lithium battery with conventional solid phase reaction requires calcining oxides, hydroxides or salts of metals after mixing in a certain proportions within a conventional heating oven. For example, for preparing anode material used as lithium ion battery ,oxides of transition metals LiCoO₂, LiNiO₂, and LiMn₂O₄ are usually as raw materials from hydroxides or salts of lithium and hydroxides or salts containing transition metals, which were calcined for long time at 700°C ∼ 900 °C , and repeated for several times. The electrochemical reversible capacity of the obtained materials is between 120∼140mAh/g. Which are described in following references: 1. K. Mizushima, P. C. Jones, P. J. Wiseman and J. B. Goodenough, Materials Research Bulletin, 15, 783(1980), 2. M. G. S. R. Thomas, W. I. F. David, J. B. Goodenough and P.Groves, Materials Research Bulletin, 20, 1137(1985), 3. M. M. Thackeray, W. I. F. David, P. G. Bruce and J. B. Goodenough, Materials Research Bulletin, 18, 461(1983))

For heating process in conventional heating oven, the heat is transferred from a heating body to the centre of the sample ,which requires usually prolonged insulating time for 24 to 48 hours, in order for the heated sample is uniform. It would cost large amounts of energy and time. In addition, prolonged calcination will cause crystallite of material to be grown up. For facilitating use of the material in secondary lithium battery,and fime powder can be only obtained through regrinding , with the result that the size distribution of crystallite is not uniform and configuration of crystallite is irregular, which deteriorates the properties of anode materials. Furthermore, the volatilizaion less of the lithium in compound is serious due to prolonged heating process and adding overdose lithium salt is usually required in the reaction process in order to supplement, so that using conventional solid phase reaction method is extremely difficult to control the composition and uniformity of end products. Therefore, the energy sources producing anode material used for secondary lithium batteries with conventional solid phase reaction method costs large and its productivity is low, the formulation of materials is difficult to controll, which causes poor reproducibility and unstable material performance.

The object of the present invention is to save energy sources and to increase the productivity. A further objects is to reduce the volatilizaion loss of lithium salt in the preparing process, to ensure that the formulation can be precisely controlled and the reproducibility is good, and to obtain microcrystal anode material with uniform crystallite, the cycle ability of its anode materials is good and charging and discharging heavy current can be resisted. It provides thereby a method to synthesize anode materials for secondary lithium battery by heating the mixture for of oxides, hydroxide or its salt raw materials of lithium and transition metals such as Co, Ni, Mn, Cr in microwave oven.

### Disclosure of the Invention

The present invention relates to a method of preparing anode materials for secondary lithium batteries by microwave energy, the general formula of anode materials is Li₁₊ₓM_{1-y}M'_{ω}O_{4-z} (wherein x=-1∼5, y=-1∼1, ω=0∼6, Z=-8∼3, M,M'=Co, Ni, Mn, Cr, V, Ti, Sc, Fe). The oxides, hydroxides or salts of Co, Ni, Mn, Cr, V, Ti, Sc, Fe and Li as raw materials are weighted in required composition ratio of the general formula and a precursor is prepared by usual dry or wet blending. The precursor may be also prepared by wet chemical method including coprecipitation, sol-gel, Pechini process. Precursors pressed into pellets or kept in loose state are placed in a container made from thermal insulating materials being microwave permeable which includes mullite foamed refractory bricks, Al₂O₃ foamed refractory bricks and high-temperature resistant glass and the like, are then placed in a single-mode or multimode microwave oven with microwave frequency of 2.45 gigahertz (GHz) or 28 gigahertz (Ghz) or 60 gigahertz (GHz), the using range of microwave frequency is 0.3-300 gigahertz(GHz) and microwave wavelength is between 1mm ∼ 1m, and are then heat-synthesized for 1 minute∼5hours as thermal insulating time at 500°C ∼ 1000 °C, then cooled in the oven, to prepare the anode material for secondary lithium battery. The materials prepared include: Li₁₊ₓCoO₂, Li₁₊ₓNiO₂, Li₁₊ₓMnO₂, Li₁₊ₓCo_{y}Ni_{1-y}O₂, Li₄Mn₄O₉, LiMnO₂, Li₂MnO₃, Li₅Mn₄O₉, Li₄Mn₅O₁₂.

This invention utilizes electromagnetic wave with microwave frequency between 0.3GHz and 300 GHz. its corresponding wavelength is between 1m and 1mm, which has characteristics of short wavelength, high frequency, high permeability, and with obvious quantum behavior. As a new energy source, the material can be fast heated and calcined. Microwave heating is completely different with the conventional heating, its special feature is that the microwave energy was absorbed by the matter itself to be heated and converted into thermal energy and causes temperature increment to a certain extent, the heat is inside produced not from outside heating source, this is a mode of body being heated, so the synthetic temperature is lower than the conventional process. After the matter absorbs microwave energy and converts it into kinetic energy of its inner molecules and thermal energy, the whole matter is heated simultaneously. Since the absobability of material relating to microwave energy is proportional to temperature, which causes the heating temperature increment in the form of index, so that which produces very high heating rate, the material will be rapidly across the low-temperature area of fast diffusive surface, the fine crystal microstructure is maintained in high-temperature area where grain boundary and lattice diffusion predominate over surface diffusion. Therefore the time available for grain growth is substantially shortened in this process. As a result, a uniform, fine and dense microstructure can be achieved. Moreover, energy consumption and processing time are reduced significantly. It can be seen from the SEM micrograph that the grain size of material is between 0.1-0.5µm, which is about 1/10 of that of LiCoO2 synthesized by conventional process. In addition, agglomeration of grains is avoided and one can use directly the powder as synthesized without further milling..

The anode active material prepared by this invention may be a lithium-containing transition metal oxides which is capable of reversibly intercalating and deintercalating lithium ions. Lithium-containing transition metal oxides, can be prepared from a lithium-containing compound and at least one compound of transition metals, such as Co, Ni, Mn, Cr, V, Ti, Sc, Fe. The oxide may contain other metals,such as Al, Ga, Ti and the like,its adding proportion is up to 30 mol%. Examples for the anode active material of the lithium-containing transition metal oxide in the present invention are LiₓCoO₂, Li₁₊ₓNiO₂, Li₁₊ₓMnO₂, Li₁₊ₓCo_{y}Ni_{1-y}O₂ . In present invention, a spinel type manganese-lithium oxide can be prepared as a anode active material, its typical one is LiMn₂O₄ . The manganese -lithium oxides of spinel structure prepared using present invention can have various states which include normal spinel structure, inverse-spinel structure, defect-free type structure, defective non-stoichiometrical structure and the like.The synthetic atmosphere may be an oxidizing atmosphere or a reducing atmosphere. For example, synthesis can be performed in air,in arbitrary oxygen dividing pressure, in hydrogen, in carbon monoxide, in nitrogen, in argon, or in carbon dioxide, and the like.

The advantages of present invention is in that the anode, material of lithium ion battery haet-synthesized using microwave can reduce substantially the synthetic temperature, shorten the synthetic time and increase the productivety due to that the synthesis is completed in a very short time, the volatilization of lithium amount in whole process is negligibie, and the composition ratio of material ensures constant. Since the grain growth can be well controlled, further milling process relative to material is negligible; the prepared anode materials have high electrochemical capacity and other superior properties compared with those synthesized by conventional process, especially, which can be charged and discharged under heavy current.

### Summary Description of Drawings:

- Fig. 1: is a temperature increment curve using typical microwave-heated .
- Fig. 2: is SEM micrograph of the anode material LiCoO₂ for secondary lithium battery, which is synthesized by microwave energy.
- Fig. 3: is X-ray diffractogram of sample of the anode material LiCoO₂ for secondary lithium battery, which is synthesized by microwave energy.
- Fig. 4: is charge and discharge curves of assembled battery using metal lithium and anode material LiCoO₂ for secondary lithium battery, which is synthesized by microwave energy.
- Fig. 5: is the cycle ability of the anode material LiCoO₂ for secondary lithium battery, which is synthesized by microwave energy.
- Fig. 6: is X-ray diffractogram of sample of the anode material LiMn₂O₄ for secondary lithium battery, which is synthesized by microwave energy.
- Fig.7: is charge and discharge curves of assembled battery using metal lithium and anode material LiMn₂O₄, which is synthesized by microwave energy.
- Fig. 8: is the cycle ability of the anode material LiMn₂O₄ for secondary lithium battery, which is synthesized by microwave energy.

### Best Mode for Carry out the Invention

### Example 1

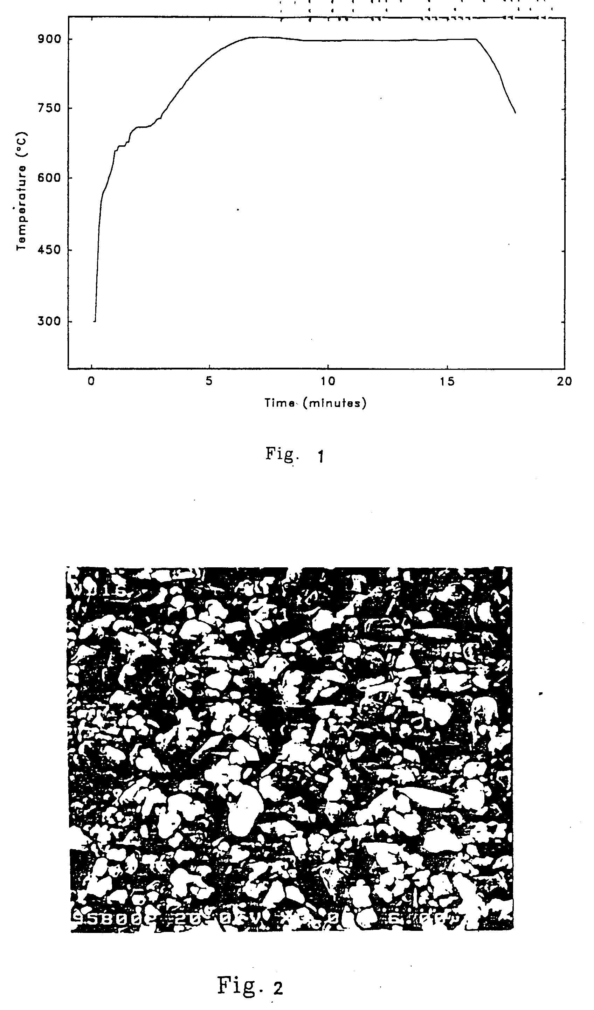

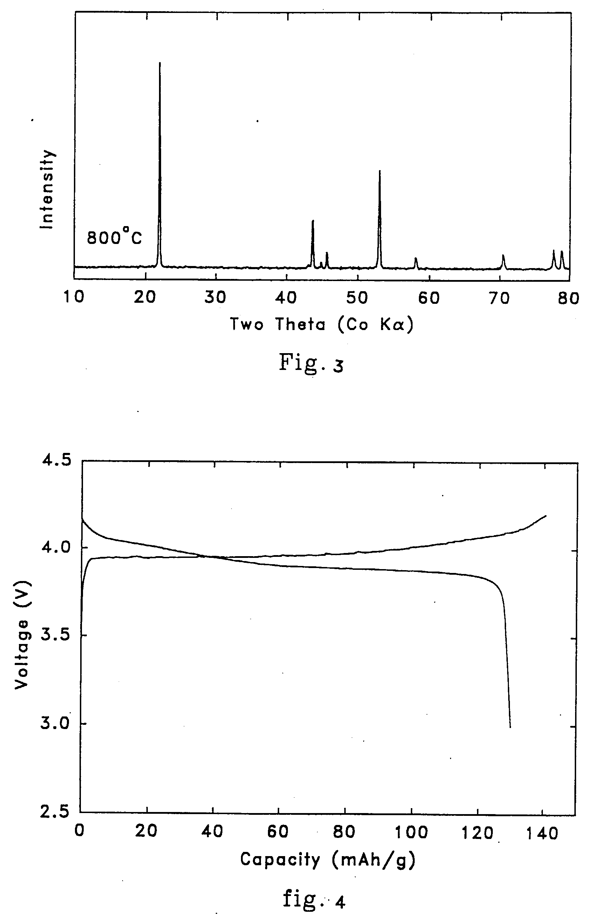

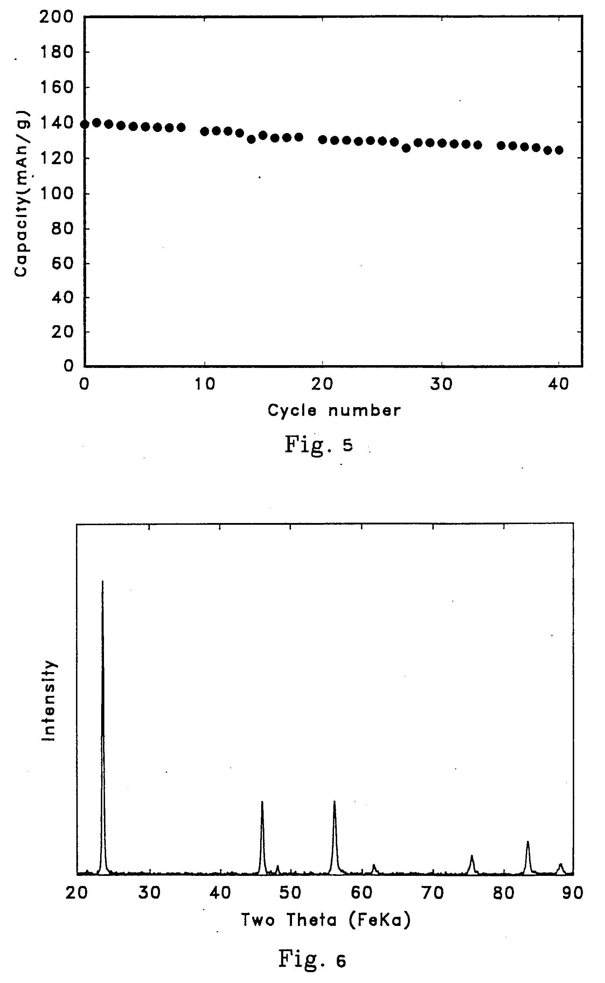

To synthesize anode material LiCoO₂ is according to Li₁₊ₓM_{1-y}M'_{ω}O_{4-z}(wherein x=0;y=0;ω=0;z=2),M=Co: lithium salt uses chemical-pure lithium hydroxide, cobalt salt uses chemical-pure dicobalt trioxide, two raw materials are weighed in weight ratio 1:3.47, which were uniformly blended by the conventional dry mixing process and pressed into pellets as precursor, placed thereafter in a container with mullite foamed refractory, then in a single-mode microwave oven with microwave frequency of 2.45Ghz, corresponding wavelength of 12.24cm and is synthesized at synthetic temperature of 800 °C for insulating time of 10min in the synthetic atmosphere being air. Which is then cooled in the oven, the whole process costs totally about 20 minutes, a temperature increment curve using microwave-heated is shown in Fig.1 The crystallite size of synthesized LiCoO₂ observed from the SEM is 1∼2µm (shown in Fig.2), while that of conventional synthesized one is 10∼20µm. It can be seen from X-ray diffractogram in Fig.3 that LiCoO₂ synthesized by microwave energy has a very high purity, i.e. there is no observable impurity phases. Its electrochemical reversible capacity is 140 mAh/g (see Fig.5), and the cycle ability is rather good.

### Example 2

To synthesize anode material LiNiO₂ is according to Li₁₊ₓM_{1-y}M'_{ω}O_{4-z}(wherein x=0;y=0;ω=0;z=2),M=Ni: lithium salt uses chemical-pure lithium nitrate, nickel salt uses analytically pure nickel oxide, two raw materials are weighed in weight ratio 1: 0.75, which were uniformly blended by the conventional dry mixing process, the synthetic process is as described in example 1, the synthetic temperature is 700 °C for insulating time of 30min in the synthetic atmosphere being air. Which is then cooled in the oven . The crystallite size of synthesized LiNiO2 is 1∼2µm, its electrochemical reversible capacity is 150 mAh/g and shows good cycle ability.

### Example 3

To synthesize anode material LiNi_{0.9}O₂ is according to Li₁₊ₓM_{1-y}M'_{ω}O_{4-z}(wherein x=-0.1;y=0;ω=0;z=2),M=Ni: two raw materials are as same as described in example 1, but weighed in weight ratio 1:0.83, which were uniformly blended by the dry mixing process, pressed into pellet and synthesized under same condition as above-mentioned. Its synthetic temperature is 500 °C, for insulating time of 1 hour in the synthetic atmosphere being argon. Its electrochemical reversible capacity is 120 mAh/g and shows good cycle ability.

### Example 4:

To synthesize anode material LiNi_{0.91}Co_{0.09}O₂ is according to Li₁₊ₓM_{1-y}M'_{ω}O_{4-z}(wherein x=0;y=0.09;ω=0.09;z=2),M=Ni, M'=Co: lithium salt uses chemical-pure lithium hydroxide, nickel salt uses analytically pure nickel oxide, cobalt uses dicobalt trioxide, three raw materials are weighed in weight ratio 1:3.14:0.31,which were uniformly blended and pressed into pellets, are then placed in a container with mullite foamed refractory bricks and are synthesized thereafter in a single mode microwave oven with microwave frequency of 2.45Ghz. Its synthetic temperature is 700 °C for insulating time of 10min, and cooled in the oven. The product has single phase with electrochemical reversible capacity of 150 mAh/g and good cycle ability.

### Example 5:

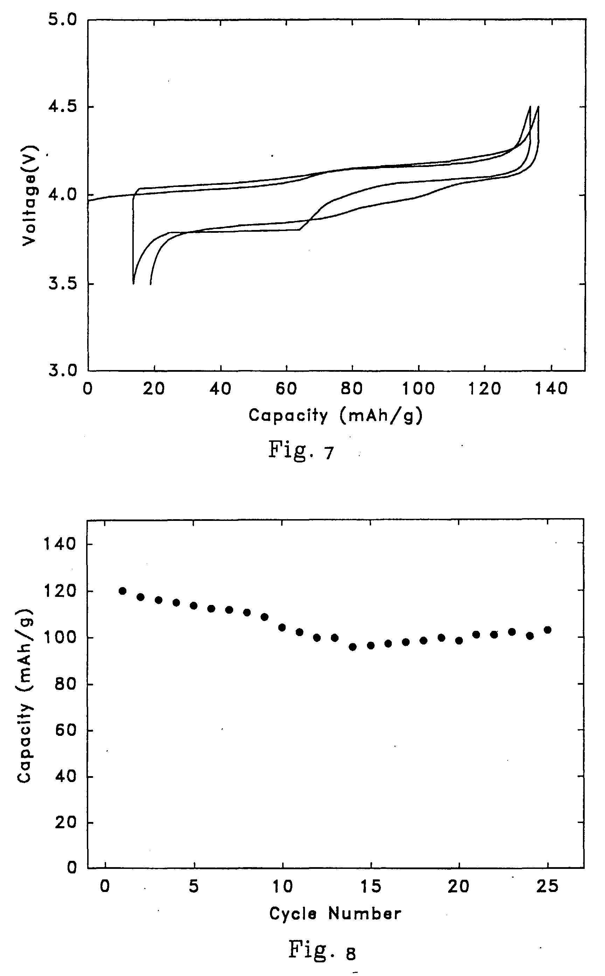

To synthesize anode material LiMn₂O₄ is according to Li₁₊ₓM_{1-y}M'_{ω}O_{4-z}(wherein x=0;y=-1;ω=0;z=0),M=Mn: chemical-pure lithium hydroxide and chemical-pure manganese dioxide are used as raw materials which were weighed in weight ratio 1:7.26, blended uniformly and pressed into pellets, and are placed in a container with mullite foamed refractory bricks, then in a multimode home microwave oven with frequency of 28Ghz, The sample was heated at 700 °C for 20min, and cooled in the oven. The synthesized LiMn₂O₄ has uniform crystallite ranging from 1 to 2 µm and high purity phase (see Fig.6) .Its electrochemical reversible capacity is 120 mAh/g (see Fig.7) and with good cycle ability (see Fig.8).

### Example 6:

To synthesize anode material LiCr_{0.4}Mn_{1.6}O₄ is according to Li₁₊ₓM_{1-y}M'_{ω}O_{4-z}(wherein x=0;y=-0.6;ω=0.4;z=4),M=Mn, M'=Cr: chemical pure lithium hydroxide, chemical-pure dichromium trioxide and chemical-pure manganese dioxide are used as raw materials. Which were weighed in weight ratio 1:1.27:5.81, blended uniformly and pressed into pellets, are then placed in a container with mullite foamed refractory bricks, and thereafrer in multimode home microwave oven with frequency of 60 Ghz. The sample was heated at 700 °C for 20min, and then cooled in the oven. The synthesized LiCr_{0.4}Mn_{1.6}O₄ has electrochemical reversible capacity of 100 mAh/g.

### Example 7:

To synthesize anode materials LiCo_{0.9}Fe_{0.1}O₂ is according to Li₁₊ₓM_{1-y}M'_{ω}O_{4-z}(wherein x=0;y=0.1;ω=0.1;z=2),M=Co, M'=Fe: Co(NO₃)₂, Fe(NO₃)₂ and LiNO₃ are as raw materials, the precursor is prepared by conventional wet chemical method. Citric acid and ethylene glycol as the monomers form a polymeric base. Metal nitrates were dissolved according to atomic ratio Li:Co:Mn=1:0.9:0.1 in a mixture of citric acid and ethlyene glycol. The resulting solution was esterized at 100-140 °C.An organic foamed precursor is then obtained with vacuum dried at 180 °C. The precursor is calcined at 400 °C for 5h to burn out the organic substance, and blended uniformly and pressed into pellets, then placed in a container made of high-temperature borosilicate glass and which are heated in a multimode home microwave oven with frequency of 28Ghz at 500 °C for insulating time of 5 hours.

### Example 8:

To synthesize anode material LiMn_{1.9}V_{0.1}O₄ is according to Li₁₊ₓM_{1-y}M'_{ω}O_{4-z}(wherein x=0;y=-0.9;ω=0.1;z=0),M=Mn, M'=V: lithium acetate, manganese acetate, vanadium acetate are as raw materials, the precursor is prepared by sol-gel. Ethylene glycol methly ether is as solvent, α-methacrylic acid and diethylenetriamine as the monomers form a polymer. Metal acetates were dissolved according to atomic ratio Li:Mn:V=1:1.9:0.1 in ethylene glycol methyl ether and added with methacrylic acid and diethylenetriamine. The obtained sol was heated at 120-140 °C and cured to form gel. Precursor is obtained through heating treatment at 500 °C for 5 hours. Which is then blended uniformly and pressed into pellets, heated in microwave oven at 700 °C for insulating time of 10min.

### Exanple 9

To synthesize anode materials LiMnO₂ is according to Li₁₊ₓM_{1-y}M'_{ω}O_{4-z}(where in x=o; y=o; ω=o; Z=2), M=Mn: CMD(36.3g) and LiOH(10g) were ball-milled, blended uniformly, pressed into pellets, and then placed in a container with aluminium oxide fire-resistant material, then synthesized in a single-mode microwave oven with frequency of 2.45Ghz. The synthetic atmosphere is argon atmosphere. It was heated at 500 °C for 5min and then reground uniformly, heated at 900 °C for 10min.

## Claims

1. A method preparing anode materials for secondary lithium batteries by using microwave energy, it includes: transition metals M, oxides, hydroxides or salt of M'=Co, Ni, Mn, Cr, Ti, V, Sc, Fe and Li are as raw materials which are blended uniformly and prepared as precursor through conventional mixing process and then heat-synthesized, characterized in that the composition of the anode materials is according to compostion ratio of Li₁₊ₓM_{1-y}M'_{ω}O_{4-z}, wherein x=-1∼5;y=-1∼1;ω=0∼6;z=-8∼3;M,M'=Co, Ni, Mn, Cr, Ti, V, Sc, Fe), precursors pressed into pellets or kept in loose state, are placed in a container made from thermal insulating materials being microwave permeable and high-temperature glass, then in a single-mode or multimode microwave oven with microwave frequency ranging 0.3∼300 Ghz and microwave wavelength is between 1mm-1m, and then heat-synthesized for 1 minute∼5hours at insulating time of 500 °C∼1000 °C,and cooled in the oven.

2. The preparing method according to the claim 1, characterized in that said insulating materials being microwave permeable is mullite refractories, aluminium oxide refractories and borosilicate glass materials.

3. The preparing method according to the claim 1, characterized in that the synthetic atomosphere in microwave oven is oxidizing atmosphere, reducing atmosphere or neutral atmosphere.
